# EUROPEAN PATENT APPLICATION

(11) **EP 2 523 498 A1**
(43) Date of publication of application: **14.11.2012**
(21) Application number: 11731803.0
(22) Date of filing: 05.01.2011
(51) Int. Cl.: H04W 24/10, H04W 16/28, H04W 72/08, H04W 72/12

(54) **USER EQUIPMENT, BASE STATION AND METHOD IN MOBILE COMMUNICATION SYSTEM**

(30) Priority: 08.01.2010 JP 2010003034
(71) Applicant: NTT DOCOMO, INC., Chiyoda-ku Tokyo 100-6150 (JP)
(72) Inventor: OKUBO, Naoto, Tokyo 100-6150 (JP); ABE, Tetsushi, Tokyo 100-6150 (JP); ABETA, Sadayuki, Tokyo 100-6150 (JP)
(74) Representative: HOFFMANN EITLE
(86) International application number: PCT/JP2011/050061
(87) International publication number: WO 2011/083805

(57) **Abstract**

A user device includes a RI generating unit that generates a rank indicator based on a channel condition of a downlink, and a transmitting unit that transmits an uplink signal including the rank indicator to a base station. When the rank indicator is reported to the base station prior to category information of the user device being reported, the RI generating unit generates the rank indicator of a number of bits that has already been known to the user device and the base station.

## Description

### TECHNICAL FIELD

The present invention relates to a user device, a base station, and a method for mobile communication systems.

### BACKGROUND ART

In such kind of a technical field, mobile communication systems that can be the successors to the so-called "third generation" has been studied by the 3GPP, which is the standards body of the wideband code division multiple access system (W-CDMA). Especially, the successors to the W-CDMA system, the High Speed Downlink Packet Access System (HSDPA), and the High Speed Uplink Packet Access System (HSUPA) include the Long Term Evolution System (LTE), and the IMT-Advanced System, which is the further successor.

In the LTE system and the like, downlink and uplink communications are performed by allocating one or more resource blocks (RB: Resource Block) to a user device (UE: User Equipment). The resource blocks are shared by plural user devices in the system. For the case of the LTE system, a base station device determines, for each sub-frame that is 1 ms, user devices to which the resource blocks are to be allocated, among the plural user devices. The sub-frame is also referred to as a "transmission time interval" (TTI: Transmission Time Interval). The process of determining the allocation of the radio resources is called scheduling. For the case of the downlink, the base station device transmits a shared channel to the user devices that have been selected by the scheduling by using one or more resource blocks. This shared channel is called a "physical downlink shared channel" (PDSCH: Physical Downlink Shared CHannel). For the case of the uplink, the user devices that have been selected by the scheduling transmit a shared channel to the base station device by using one or more resource blocks. This shared channel is called a "physical uplink shared channel" (PUSCH: Physical Uplink Shared CHannel).

In a communication system using such shared channels, in principle, it is necessary to perform signaling (reporting) for each sub-frame so as to report the user devices to which the shared channel is allocated. A control channel used for the signaling is called a "physical downlink control channel" (PDCCH: Physical Downlink Control CHannel) or a downlink L1/L2 control channel (DL-L1/L2 Control Channel).

The downlink control signal includes, in addition to the PDCCH, a physical control format indicator channel (PCFICH: Physical Control Format Indicator Channel), a physical hybrid ARQ indicator channel (PHICH: Physical Hybrid ARQ Indicator Channel), and the like.

The PDCCH may include, for example, the following information:
- Downlink Scheduling Information,
- Uplink Scheduling Grant, and
- Transmission Power Control Command Bit.

The downlink scheduling information includes, for example, information regarding a downlink shared channel. Specifically, the downlink scheduling information may include downlink resource block allocation information, identification information of user devices (UE-ID), the number of streams, information regarding pre-coding vectors, data sizes, modulation schemes, information regarding a hybrid automatic repeat request (HARQ), and the like.

The uplink scheduling grant includes, for example, information regarding an uplink shared channel. Specifically, the uplink scheduling grant includes uplink resource allocation information, identification information of a user device (UE-ID), data sizes, modulation schemes, uplink transmission power information, information regarding a demodulation reference signal used in uplink MIMO, and the like.

The PCFICH is information that is utilized to report the format of the PDCCH. More specifically, the PCFICH reports the number of OFDM symbols to which the PDCCH is mapped. In LTE, the number of OFDM symbols to which the PDCCH is mapped is 1, 2, or 3. The PDCCH is mapped from a top OFDM symbol of the sub-frame in order.

The PHICH includes an acknowledgement signal (ACK/NACK: Acknowledgement/Non-Acknowledgement signal) indicating whether retransmission of the PUSCH, which has been transmitted on the uplink, is required or not.

For the case of the uplink, user data (a normal data signal) and control information accompanying the user data are transmitted by the PUSCH. Besides the PUSCH, a downlink channel quality indicator (CQI: Channel Quality Indicator), a signal indicating radio resource allocation for the uplink, an acknowledgement signal for the PDSCH, and the like are transmitted by a physical uplink control channel (PUCCH: Physical Uplink Control Channel). The CQI is used for a scheduling process, an adaptive modulation and coding scheme (AMCS: Adaptive Modulation and Coding Scheme), and the like. Additionally, in the uplink, a random access channel (RACH) that is utilized during initial connection, a sounding reference signal for measuring receiving quality of the uplink, and the like are transmitted.

Incidentally, when the multiple input multiple output (MIMO) scheme is utilized for wireless communications, a transmission diversity scheme and a spatial multiplexing scheme are considered as signal transmission schemes. The transmission diversity scheme attempts to improve receiving quality by increasing the spatial diversity gain by transmitting signals of the same information from plural antennas. The spatial multiplexing scheme attempts to increase the data rate by simultaneously transmitting different signals from corresponding antennas. In general, it is preferable that, when a radio propagation condition is not good, the transmission diversity scheme be utilized, and when the radio propagation condition is good, the spatial multiplexing scheme be utilized. To realize this, there is technology called "rank adaptation."

A rank may be defined, for example, to be the number of different data streams transmitted through plural antennas. For example, when the number of antennas is 2, the transmission diversity can be performed by transmitting identical information from the two antennas. In this case, the rank is 1. On the other hand, the spatial multiplexing can be performed by transmitting signals having different information from the corresponding 2 antennas. In this case, the rank is 2. Further, when the number of antennas is 4, the rank can take values of 1, 2, 3, or 4. In general, when the number of antennas is N, the rank can take values of 1, 2, ..., or N.

In general, the rank for the case where the base station device performs downlink data transmission is controlled by the technology called "rank adaptation." The user device determines the optimum rank by measuring receiving quality by using a reference signal transmitted on the downlink. The determined rank is reported to the base station device as a rank indicator (RI) by the physical uplink control channel (PUCCH). For the case of the rank adaptation, the user device and the base station adaptively select a rank that is most suitable for the communication condition among the ranks that can be utilized by both sides, and thereby attempt to improve signal quality. Therefore, the number of bits that is required for expressing the RI differs depending on capabilities of the user device and the base station (especially, antenna configurations). For example, when the RI is 1 or 2, the RI can be expressed by 1 bit. However, when the RI is 4, 2 bits are required. Furthermore, when the RI is 8, 3 bits are required.

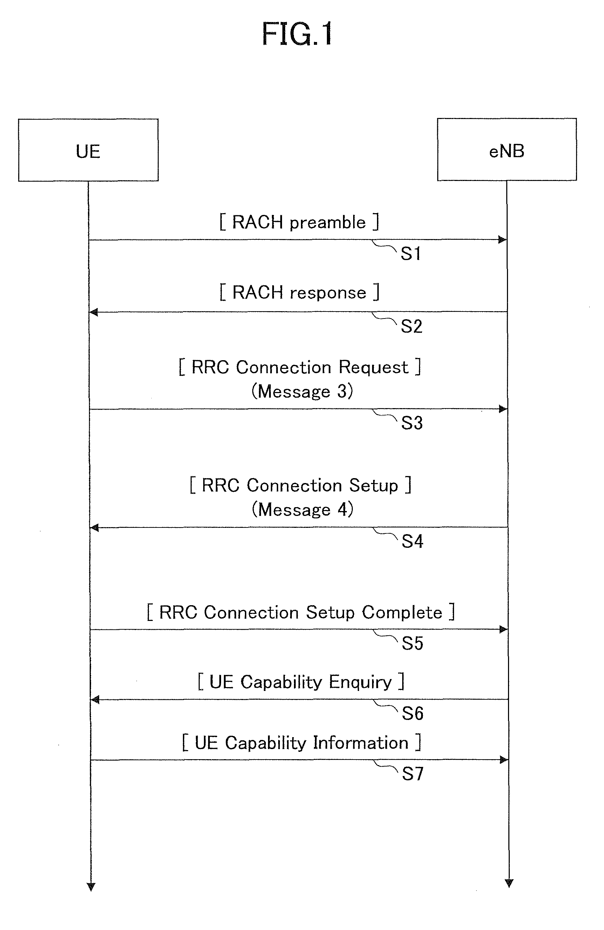

FIG. 1 shows RRC message sequences of a user device UE and a base station eNB in a mobile communication system that performs the rank adaptation. First, the user device UE transmits a RACH preamble to the base station eNB, and thereby indicates an intention to start communication (S1). In response to this, the base station transmits a RACH response to the user device UE (S2). The user device UE transmits an RRC connection request message (message 3) to the base station eNB (S3). In response to this, the base station eNB transmits an RRC setup message (message 4) to the user device UE (S4). The RRC connection setup message includes information such as channel quality indicator (CQI) of the downlink, a period for reporting the rank indicator (RI), and individual resources of the PUCCH for transmitting these control channels. In response to this, the user device UE transmits a RRC connection setup complete message to the base station eNB (S5). The base station eNB inquires the capability of the user device by transmitting a UE capability enquiry message (S6). In response to this, the user device UE transmits a UE capability information message, and thereby reports the capability of itself to the base station eNB (S7). With this, the base station eNB can find the rank indicator that can be utilized by the user device UE, and thereby the base station eNB can find the rank indicator that can be utilized by both the base station and the user device. On the other hand, since the user device UE has obtained information regarding the number of antennas of the base station eNB from broadcast information that has been received prior to step S1, the user device UE can find the rank indicator that can be utilized by both the user device UE and the base station eNB.

Non-Patent Documents 1 through 4 describes mobile communication systems similar to the above-described mobile communication system.

### RELATED ART DOCUMENT

### [NON-PATENT DOCUMENT]

Non-patent document 1: 3GPP TS 36.211 v8.9.0 (2009-12)
Non-patent document 2: 3GPP TS 36.212 v8.8.0 (2009-12)
Non-patent document 3: 3GPP TS 36.213 v8.9.0 (2009-9)
Non-patent document 4: 3GPP TS 36.331 v8.7.0 (2009-9)

### SUMMARY OF THE INVENTION

### PROBLEM TO BE SOLVED BY THE INVENTION

At step S4 in the flow of FIG. 1, when the user device UE has received the RRC connection setup message, the user device UE attempts to transmit the rank indicator at a reported frequency or period. However, the base station eNB does not find the number of bits used to represent the rank indicator to be utilized by the user device UE, until the capability information of the user device UE is received at step S7.

For example, suppose that the rank of the user device UE is 2 and the rank of the base station eNB is 4, and that the capability of the user device UE is unknown to the base station eNB. In this case, the rank indicator of the user device UE can be represented by 1 bit, and the rank indicator of the base station eNB can be represented by 2 bits. Suppose that the user device UE transmits the rank indicator of 1 bit, and that the base station eNB has expected to receive the rank indicator of 2 bits. The number of the rank indicator bits affects the bit number of the whole control signal. Consequently, it is possible not only that the base station eNB does not correctly recognize the rank indicator of 1 bit reported by the user device UE, but also that the base station eNB does not correctly receive the control information that has been transmitted by the user device UE. In this manner, when the recognition regarding the number of the rank indicator bits does not match between the user device UE and the base station eNB, the base station eNB may not correctly obtain information such as the RI and the CQI. Further, when the control information is transmitted by the PUSCH, rate matching may not be performed correctly, and decoding of the PUSCH may not be performed.

A subject of the present invention is to lower the likelihood that the base station erroneously recognizes the number of the rank indicator bits in the mobile communication system that performs the rank adaptation.

### MEANS FOR SOLVING THE PROBLEM

A user device according to one embodiment is for a mobile communication system including:
a RI generating unit that generates a rank indicator based on a channel condition of a downlink; and
a transmitting unit that transmits an uplink signal including the rank indicator to a base station,
wherein, when the rank indicator is reported to the base station prior to reporting category information of the user device to the base station, the RI generating unit generates the rank indicator of a number of bits, the number of bits having already been known to the user device and the base station.

### EFFECT OF THE PRESENT INVENTION

According to one embodiment, in a mobile communication system that performs a rank adaptation, it is possible to lower the likelihood that the base station erroneously recognizes the number of the rank indicator bits.

### BRIEF DESCRIPTION OF THE DRAWINGS

FIG. 1 is a diagram showing sequences between a user device and a base station;
FIG. 2 is a sequence diagram illustrating a principle of operation;
FIG. 3 is a flowchart showing an exemplary operation of the user device;
FIG. 4 is a diagram showing an example of category information;
FIG. 5 is a flowchart showing an exemplary operation of the base station;
FIG. 6 is a sequence diagram illustrating a second modified example;
FIG. 7 is a sequence diagram illustrating a third modified example;
FIG. 8 is a schematic block diagram of the user device; and
FIG. 9 is a schematic block diagram of the base station.

### EMBODIMENTS FOR CARRYING OUT THE INVENTION

(1) According to one aspect of the present invention, a user device for a mobile communication system is utilized. The user device includes
   a RI generating unit that generates a rank indicator based on a channel condition of a downlink; and
   a transmitting unit that transmits an uplink signal including the rank indicator to a base station,
   wherein, when the rank indicator is reported to the base station prior to reporting category information of the user device to the base station, the RI generating unit generates the rank indicator of a number of bits, the number of bits having already been known to the user device and the base station.
   When the category information of the user device has been unknown to the base station and the rank indicator is reported to the base station, the rank indicator of the number of bits that has already been known to the user device and the base station is reported. With this, it is possible to lower the likelihood that the base station erroneously recognizes the number of the rank indicator bits.
(2) The number of bits that has already been known may be the number of bits that is required for expressing the rank indicator that can be utilized by all user devices in the mobile communication system. This is preferable from the viewpoint that, for all the user devices, the rank indicator including a redundant number of bits is prevented from being generated.
(3) The user device may further include a receiving unit that receives an acknowledgement signal indicating a positive response or a negative response with respect to an uplink signal including the category information. When the positive response is obtained, the RI generating unit may generate the rank indicator of the number of bits, the number of bits being determined based on the category information and a number of antennas of the base station. This is preferable from the viewpoint that the rank indicator is generated with the optimum number of bits, after the category information becomes no longer unknown to the base station eNB. The optimum number of bits may be a number of bits that is required for expressing the maximum rank number that can be utilized by both the user device and the base station.
(4) The number of bits that has already been known may be determined depending on a number of antennas of the base station. The number of bits, for example, may be a number of bits that is required for expressing the maximum rank number of the base station.
(5) Even after a positive response is obtained with respect to an uplink signal including the category information, the RI generating unit may generate the rank indicator represented by the number of bits determined depending on the number of the antennas of the base station. This is preferable from the viewpoint of reducing the processing load of the base station.
(6) The user device may further include a receiving unit that receives an acknowledgement signal indicating a positive response or a negative response with respect to an uplink signal including the category information. When the positive response is obtained, the RI generating unit may generate the rank indicator of the number of bits, the number of bits being determined based on the category information and the number of the antennas of the base station.
(7) The category information can uniquely identify the number of the rank indicator bits, which can be utilized by the user device.
(8) According to one aspect of the present invention, a base station in a mobile communication system is utilized.
   The base station includes
   a receiving unit that receives an uplink signal including a rank indicator from a user device; and
   a transmitting unit that transmits a downlink signal to the user device, the downlink signal having been scheduled based on the rank indicator,
   wherein, when the category information of the user device has been unknown to the base station, the rank indicator received by the base station is represented by a number of bits, the number of the bits having already been known to the user device and the base station.
(9) The number of bits that has already been known may be a number of bits that is required for expressing the rank indicator that can be utilized by all user devices in the mobile communication system.
(10) The transmitting unit may be, the rank indicator that is received after the uplink signal including the category information has been decoded may be represented by the number of bits that has been determined based on the category information and a number of antennas of the base station.
(11) The transmitting unit may transmit an acknowledgement signal indicating a positive response or a negative response with respect to an uplink signal including the category information, and the rank indicator that has been received after the uplink signal including the category information has been decoded or after the positive response has been transmitted may be represented by the number of bits that has been determined based on the category information and a number of antennas of the base station.
(12) The number of bits that has already been known may be a number of bits that is determined depending on a number of antennas of the base station.
(13) The rank indicator received after the uplink signal including the category information has been correctly decoded or after the positive response with respect to the uplink signal including the category information has been transmitted may be represented by the number of bits determined based on the number of the antennas of the base station.
(14) The category information can uniquely identify the number of the rank indicator bits, which can be utilized by the user device.
(15) According to one aspect of the present invention, a method for a mobile communication system is utilized.
   The method includes
   a step, by a user device, of generating a rank indicator based on a channel condition of a downlink and transmitting an uplink signal including the rank indicator to a base station;
   a step, by the base station, of transmitting the downlink signal that has been scheduled based on the received rank indicator to the user device;
   wherein the rank indicator to be reported to the base station by the user device, prior to transmitting the category information of the user device to the base station, is represented by a number of bits that has already been known to the user device and the base station.
(16) According to one aspect of the present invention, a user device in a mobile communication system is utilized.
   The user device includes
   a RRC message generating unit that generates a RRC connection request message;
   a RI bit number determination unit that determines a number of rank indicator bits;
   a RI generating unit that generates the rank indicator of the number of the bits, the number of the bits being determined by the bit number determination unit based on a channel condition of a downlink;
   a transmitting unit that transmits the rank indicator to the base station at a reporting frequency that has been notified by the base station after transmitting the RRC connection request message,
   wherein the RRC connection request message generated by the RRC message generating unit includes category information that can uniquely identify the number of the rank indicator bits that can be utilized by the user device, and
   wherein the RI bit number determination unit determines the number of bits of the rank indicator, based on the category information and an antenna configuration of the base station.
   Since the RRC connection request message includes the category information that can uniquely identify the number of the rank indicator bits, the base station may find the maximum rank number, which can be utilized by both the user device and the base station, and the optimum RI bit number, prior to transmitting the RRC connection setup message. This is preferable from the viewpoint that the base station is prevented from assuming an improper number of RI bits, when the base station receives the rank indicator.
(17) According to one aspect of the present invention, a base station in a mobile communication system is utilized.
   The base station includes
   a RRC processing unit that receives a RRC connection request message from a user device and that extracts category information that can uniquely identify a number of rank indicator bits from the RRC connection request message;
   a RRC message generating unit that generates a RRC connection setup message, the RRC connection setup message indicating at least a reporting frequency of the rank indicator;
   a RI bit number determination unit that determines the number of the rank indicator bits based on the category information and an antenna configuration of the base station; and
   a transmitting unit that transmits a downlink message to the user device, wherein the downlink message has been scheduled based on the rank indicator reported from the user device at the reporting frequency, after the user device has been reported the RRC connection setup message.
(18) According to one aspect of the present invention, a method for a mobile communication system is utilized.
The method includes
a step of transmitting, by a user device, an RRC connection request message to a base station, and extracting, by the base station, category information from the RRC connection request message, the category information being able to uniquely identify a number of rank indicator bits that can be utilized by the user device;
a step, by the base station, of notifying the user device of a RRC connection setup message, the RRC connection setup message indicating at least a reporting frequency of the rank indicator;
a step, by the user device, of determining the number of the rank indicator bits based on the category information and an antenna configuration of the base station, and generating the rank indicator of the determined number of bits based on a channel condition of a downlink; and
a step, by the base station, of determining the number of the rank indicator bits based on the category information and the antenna configuration of the base station, and receiving the rank indicator of the number of bits from the user device at the reporting frequency.

Embodiments of the present invention are explained from the following viewpoints.
1. Principle of operation
2. Modified example 1
3. Modified example 2
4. Modified example 3
5. User device
6. Base station

### <Embodiment 1>

### <1. Principle of operation>

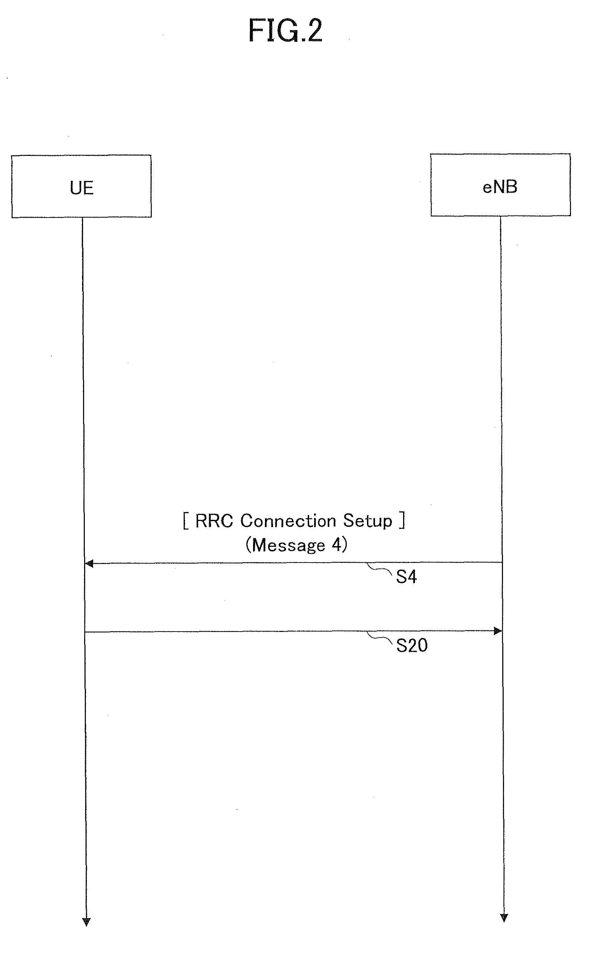

FIG. 2 shows a sequence diagram for illustrating an embodiment of the present invention. As described above, the base station eNB transmits the RRC connection setup message (message 4) to the user device UE (S4), in response to that the user device UE transmits the RRC connection request message (message 3) to the base station eNB. The RRC connection setup message includes information such as channel quality information (CQI) of the downlink, a period for reporting the rank indicator (RI), and individual PUCCH resources for transmitting through these control channels. Subsequently, a period for reporting the rank indicator (RI) has come, and at step S20, the user device UE transmits an uplink signal including the rank indicator to the base station eNB. In principle, the uplink signal is transmitted by the PUCCH. However, when the user device UE transmits through the physical uplink shared data channel (PUSCH), the uplink signal is transmitted by the PUSCH, not by the PUCCH. Here, it is assumed that the capability of the user device UE has not been known to the base station eNB at a time in which the uplink signal is transmitted and received at step S20.

In the embodiment, the rank indicator (RI) reported to the base station eNB at step S20 is represented by using a bit number that has already been known to both the user device UE and the base station eNB. The already-known bit number is a predetermined bit number such that it is used during the time period until the user device UE transmits information indicating the capability of the user device UE itself to the base station eNB (during the time period from step S4 to S7 in FIG. 1). Specifically, the already known bit number is 1 bit, for example. When the capability of the user device UE is unknown to the base station eNB, the user device UE generates the rank indicator (RI) by using one bit irrespective of its own capability and transmits the generated indicator, and the base station eNB also receives the uplink signal while assuming that the rank indicator is of one bit, irrespective of its own capability.

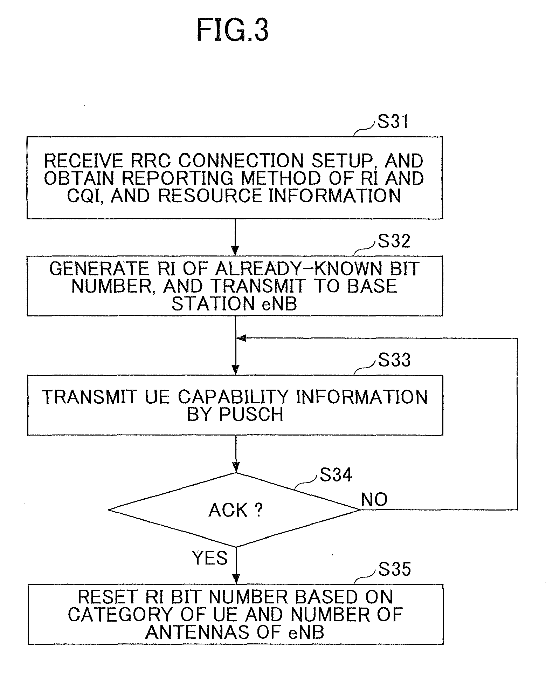

FIG. 3 is a flowchart showing an exemplary operation of the user device.

At step S31, the user device UE receives the RRC connection setup message, and obtains information such as the RI, the reporting frequency of the CQI, and the resources of the PUCCH.

At step S32, the user device UE generates a rank indicator (RI) of the already-known bit number, and transmits it to the base station eNB. For convenience of explanation, the already-known bit number is assumed to be one bit. However, the already-known bit number is not limited to this. The already known bit number may be determined from a viewpoint that the bit number is indispensable for representing a rank that can be utilized by all user devices that operate in the mobile communication system. In this explanation, it is assumed that a user device UE having 2 antennas at most may be present in the mobile communication system. Therefore, the already-known bit number is set to 1 bit.

The rank indicator is generated as a value that fits a measured value (e.g., CQI) of a radio condition of the downlink. Specifically, first, the base station eNB transmits reference signals (RS) or pilot signals from corresponding multiple antennas. The user device UE may recognize the radio condition by measuring receiving quality or spatial correlation of the reference signals (RS) received from the base station eNB, and the user device UE generates a rank indicator RI that fits the radio condition.

For example, when the user device UE is located at a cell edge, the receiving quality for a case where RI = 1 is assumed becomes better than the receiving quality for RI = 2, and a rank indicator (e.g., RI = 1) that prioritizes improvements on the receiving quality rather than enhancements of data rate is generated. Contrary to this, when the user device UE is located in the vicinity of the base station eNB, and when the receiving quality for the case where RI = 2 is assumed becomes better than that of the case where RI = 1, and it is expected that the data rate can be increased, the rank indicator (e.g., RI = 2) that causes the throughput to be improved is generated.

At step S33, the user device UE transmits UE capability information to the base station eNB. This step corresponds to step S7 of FIG. 1. The UE capability information may be transmitted by the physical uplink shared channel (PUSCH), for example. The UE capability information may also be referred to as category information. In general, the user devices UE are classified into several categories depending on the capabilities.

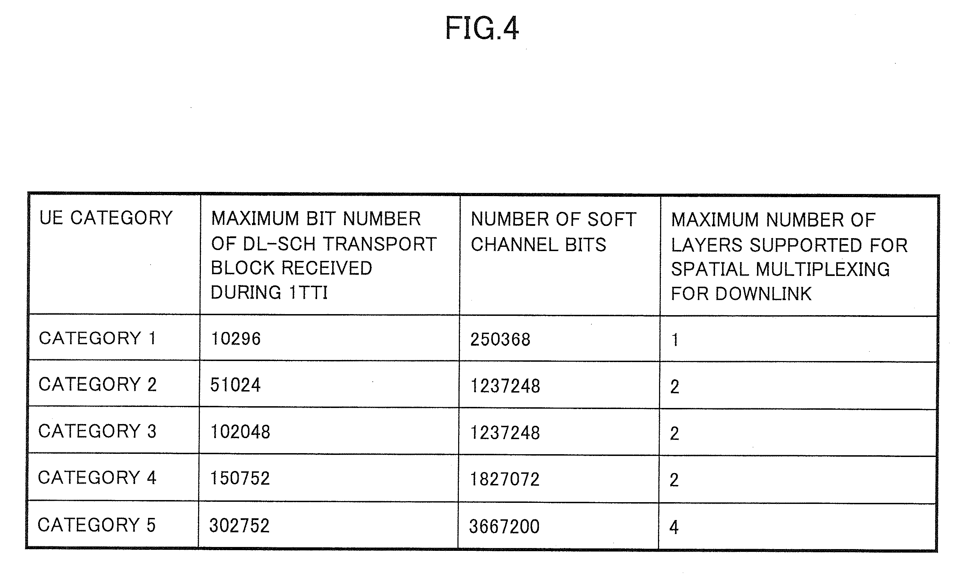

FIG. 4 shows an example of the category information. In the example shown in the figure, the user devices UE are classified into 5 categories (categories 1 - 5). The number of classifications is not limited to 5, and the number of classifications may be an arbitrary number. In general a larger category number indicates a higher processing capability. In general, "the maximum bit number of DL-SCH transport blocks received during 1 TTI" indicates the capability of receiving the downlink shared data channel. For example, two transport blocks are included in one sub-frame (TTI). "The total number of soft channel bits" indicates the number of bits that are reserved for retransmission synthesis, without immediately deleting the information that has been transmitted. "The maximum number of layers supported for the spatial multiplexing for the downlink" is information related to the above rank indicator (RI). When the value of this column is 4, the RI takes the value of 1, 2, 3, or 4. When the value of this column is 2, the RI takes the value of 1 or 2. When the value of this column is 1, the RI is 1. Therefore, the rank indicators (RI) for the user devices UE of the categories 1 through 4 can be expressed by 1 bit. The rank indicators (RI) for the user devices UE of the category 5 can be expressed by 2 bits. Therefore, by knowing the category of each of the user devices, the bit number of the rank indicator that can be utilized by the corresponding user device can be uniquely identified. Such category information has already been known to the user device UE and the base station eNB.

At step S33 in FIG. 3, the user device UE reports such category information to the base station eNB by the PUSCH. The base station eNB determines the category of the user device UE based on the received category information, and thereby the base station can find the RI bit number that is optimum for both the user device UE and the base station.

At step S34, an acknowledgement signal PHICH corresponding to the PUSCH transmitted at step S33 is received, and it is determined whether the base station eNB has successfully received the PUSCH. The acknowledgement signal PHICH is expressed by a positive acknowledgement (ACK) or a negative acknowledgement (NACK). When the acknowledgement signal PHICH indicates the positive acknowledgement (ACK), the flow proceeds to step S35.

At step S35, the user device UE determines the bit number for expressing the rank indicator (RI), based on the category information of itself and the number of antennas of the base station eNB. For example, it is assumed that the user device UE belongs to the category 5 and the number of antennas of the base station eNB is 4. In this case, both the user device UE and the base station eNB can perform up to rank-4 communications. The bit number that has been set at step S32 is 1. Thus, the user device UE changes the number of the rank indicator (RI) bits from 1 to 2 at step S35. Similarly, the base station eNB changes the number of the rank indicator (RI) bits from 1 to 2, as described later. After that, the user device UE generates a rank indicator (RI) of 2 bits and transmits it, and the base station eNB receives the rank indicator (RI) of 2 bits, and executes a process such as scheduling, based on the RI. Here, when the user device UE does not belong to the category 5, the user device can only perform rank-2 communications at most. In this case, since 1 bit is sufficient for the rank indicator (RI), it is not necessary to change the bit number for expressing the rank indicator.

On the other hand, when the acknowledgement signal PHICH corresponding to the PUSCH transmitted at step S33 indicates a negative acknowledgement (NACK) at step S34, the flow returns to step S33, and the PUSCH that was transmitted before is retransmitted. The user device UE reconfigures the number of the rank indicator (RI) bits only if a positive acknowledgement (ACK) is received from the base station eNB.

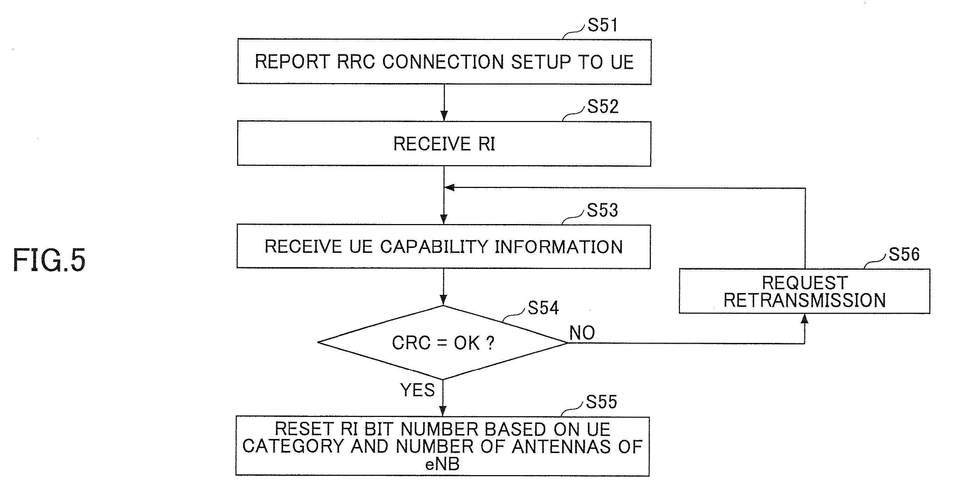

FIG. 5 is a flowchart showing an operation of the base station eNB.

At step S51, the base station eNB transmits the RRC connection setup message to the user device UE. This step corresponds to step S4 in FIG. 1. As described above, the RRC connection setup message includes information such as the reporting frequency of the RI and the CQI, and the resources of PUCCH.

At step S52, the base station eNB receives an uplink signal including the rank indicator (RI) from the user device. The uplink signal is, in principle, transmitted by the PUCCH. However, when the user device transmits the uplink signal through the shared data channel, the uplink signal is transmitted while the uplink signal is multiplexed with the shared data channel by the PUSCH. Further, for the case of the embodiment, the rank indicator (RI) of a bit number that has already been known to the user device UE and the base station eNB is received. For convenience of explanation, the already-known bit number is one bit, however, the already-known bit number is not limited to this. The already-known bit number may be determined from the viewpoint that it represents a rank that can be utilized by all the user devices operated in the communication system. In the explanation, since it is assumed that a user device that only includes 2 antennas at most may be included in the mobile communication system, the already-known bit number is set to 1 bit.

At step S53, the base station eNB receives the UE capability information or the category information from the user device UE. The category information is included in the PUSCH.

At step S54, the base station eNB performs an error detection on the PUSCH that includes the category information. When no errors are detected (CRC = OK), the base station eNB transmits an acknowledgement signal indicating a positive acknowledgement (ACK) to the user device UE, and the flow proceeds to step S55.

At step S55, similar to step S35 of FIG. 3, the base station eNB determines the number of the rank indicator (RI) bits that will be communicated in the subsequent communications, based on the category information and the number of the antennas of the base station eNB. Specifically, the bit number is selected such that it is necessary for expressing the maximum rank number that can be utilized for both the user device and the base station. Here, the switching of the step S55 may be performed immediately after that the "CRC = OK" has been determined, prior to the base station eNB transmitting the acknowledgement signal indicating the positive acknowledgement (ACK).

On the other hand, when an error is detected (CRC = NG) at step S54, the flow proceeds to step S56.

At step S56, the base station eNB transmits an acknowledgement signal PHICH indicating a negative acknowledgement (NACK) to the user device UE, and requests retransmission of the PUSCH. Then the flow returns to step S53.

According to this operation example, when the base station eNB has not received the category information of the user device UE, the number of the rank indicator (RI) bits reported from the user device (UE) is forced to be an already-known value (e.g., 1 bit). Therefore, the likelihood that the base station eNB erroneously recognizes the number of the rank indicator (RI) bits is lowered. Further, according to the operation example, after the base station eNB has received the category information, a necessary and sufficient bit number is set, depending on the rank that can be utilized by both the user device UE and the base station eNB. Therefore, the embodiment is preferable from the viewpoint that the case where the category information is unknown can be handled, while the embodiment complies with the rule that "the number of the RI bits is determined by the configuration of the antennas of the base station eNB and the category information of the user device UE."

### <2. Modified example 1>

Incidentally, in the above operation example, the bit number that has already been known to both the user device UE and the base station eNB is determined, from the viewpoint that the bit number is required for expressing the rank that can be utilized by all the user devices that operate in the communication system. However, the present invention is not limited to this. The already-known bit number may be determined from another viewpoint.

The user device UE has received broadcast information (BCH), prior to transmitting a RACH preamble. The broadcast information includes the information about the number of the antennas in the base station eNB. Therefore, in a first modified example of the present invention, the bit number that is determined depending on the number of the antennas of the base station eNB is set as the already-known bit number described above. Specifically, the bit number that is necessary for expressing the maximum rank number of the base station eNB is set as the already-known bit number. For example, when the number of antennas of the base station eNB is 4, the maximum rank number is 4. Therefore, the already-known bit number is set to be 2. Subsequently, when the base station eNB receives the category information, the number of the rank indicator (RI) bits is reset, based on the category information and the number of the antennas of the base station eNB. Namely, the number of the RI bits is reset to be a bit number that is required for expressing the maximum rank number that can be utilized by both the user device and the base station.

In the modified example 1, when the base station eNB has not received the category information, the user device UE generates a rank indicator (RI) of 2 bits and transmits the rank indicator, even if the user device UE includes only 2 antennas at most. Therefore, when the capability of the user device UE is low, the rank indicator (RI) having the bit number that is greater than the required bit number is generated. For example, the rank of the user device UE of the category 3 can originally be expressed by 1 bit. However, in the case of this modified example, the rank of the user device US of the category 3 is expressed by 2 bits. This modified example is particularly advantageous for the case where many user devices UE having high capabilities are serving in the cell. That is because, accurate rank indicators (RI) are generated for those user devices UE, and the throughput for the entire cell can be improved.

### <3. Modified example 2>

In the modified example 1, the bit number that is derived depending on the number of the antennas of the base station eNB (specifically, the bit number that is necessary for expressing the maximum rank number of the base station eNB) is set to be the above already-known bit number. Subsequently, when the base station eNB receives the category information, the number of the rank indicator (RI) bits is reset based on the category information and the number of the antennas of the base station eNB.

In a second embodiment, such a reset is not performed, and the number of the rank indicator (RI) bits is maintained to be the value determined depending on the number of the antennas of the base station eNB throughout.

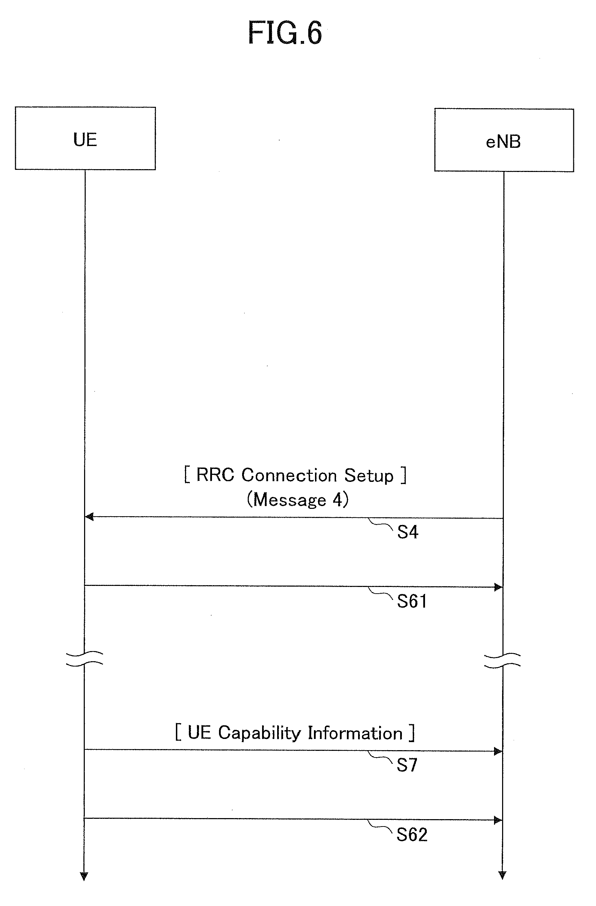

FIG. 6 shows a sequence diagram for illustrating the modified example 2. The user device UE has already received the broadcast information (BCH), and has obtained information such as the information about the number of the antennas of the base station eNB. As described above, the base station eNB transmits the RRC connection setup message (message 4) to the user device UE (S4), in response to the RRC connection request message (message 3) that has been transmitted from the user device UE to the base station eNB. The RRC connection setup message includes information such as the channel quality indicator (CQI) of the downlink, the period for reporting the rank indicator (RI), and the resources of the PUCCH.

Subsequently, the period for reporting the rank indicator (RI) comes, and the user device UE transmits an uplink signal including the rank indicator to the base station eNB at step S61. In principle, the uplink signal is transmitted by the PUCCH. However, when the user device UE transmits the uplink signal by the shared data channel (PUSCH), the uplink signal is multiplexed with the shared data channel by the PUSCH, not by the PUCCH. At the time of transmitting and receiving the uplink signal at step S61, the capability of the user device UE is unknown to the base station eNB. At step S61, the rank indicator (RI) to be reported to the base station eNB is expressed by a bit number that has already been known to both the user device UE and the base station eNB. In the modified example 2, the already-known bit number is the value that has been derived from the number of the antennas of the base station eNB. Specifically, the already-known bit number is the bit number that is required for expressing the maximum rank number of the base station eNB. For example, the bit number is 2 (here, it is assumed that the number of antennas of the base station eNB is 4).

At step S7, the category information of the user device UE is transmitted to the base station eNB. Here, it is assumed that the PUSCH has successfully been received. Namely, it is assumed that the base station eNB transmits a positive acknowledgement (ACK) to the user device UE. After that, the period for reporting the RI comes.

At step S62, similar to the process at the step S61, the user device UE generates a rank indicator RI of 2 bits and transmits the rank indicator. Unlike the modified example 1, the number of the rank indicator (RI) bits is not reset. Therefore, the rank indicator (RI) of two bits is transmitted.

According to the modified example 2, the number of the rank indicator (RI) bits may not be changed in the user device UE and the base station eNB. Therefore, the modified example 2 is preferable, for example, from the viewpoint that the processing load can be reduced.

### <4. Modified example 3>

As described above, in the state prior to the user device UE transmitting the category information to the base station eNB at step S7 of FIG. 1, it is possible that the base station eNB erroneously recognizes the number of the rank indicator (RI) bits. The reporting of the rank indicator (RI) is started at and after the step S4. Therefore, a problem arises that the number of the RI bits may be erroneously recognized, between step S4 and step S7.

In a modified example 3, the existing RRC connection request message is modified so that the RRC connection request message includes the category information of the user device UE.

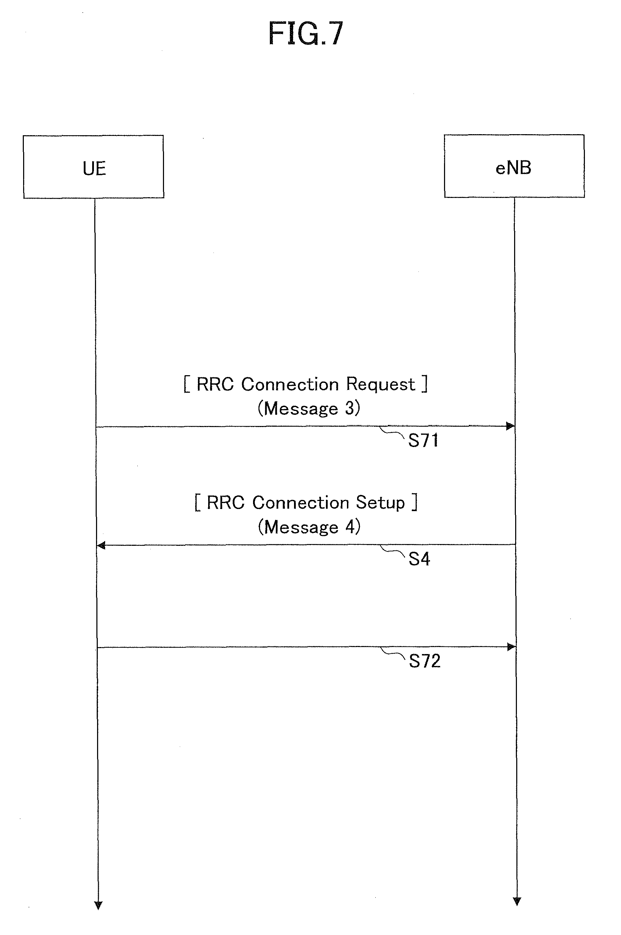

FIG. 7 shows a sequence diagram for illustrating the modified example.

At step S71, the user device UE transmits the RRC connection request message to the base station eNB. Unlike before, the RRC connection request message includes the category information of the user device UE. Therefore, the base station eNB that has received the RRC connection request message can determine the optimum number of the RI bits based on the category information and the number of the antennas of the base station eNB. Specifically, the number of the RI bits is determined to be the bit number that is required for expressing the maximum rank number that can be utilized by both the user device and the base station. Since the user device has already acquired the information about the number of the antennas of the base station eNB from the broadcast information, the user device can also determine the same optimum number of the RI bits, based on the category information and the number of the antennas of the base station eNB.

At step S4, the base station eNB transmits the RRC connection setup message (message 4) to the user device UE. The RRC connection setup message includes information such as the channel quality information (CQI) of the downlink, the period for reporting the rank indicator (RI), and individual resources of the PUCCH for transmitting through these control channels.

Subsequently, when the period for reporting the rank indicator (RI) comes, the user device UE transmits an uplink signal including the rank indicator of the above described optimum number of the RI bits to the base station eNB at step S72.

For the case of this modified example, the processes corresponding to steps S6 and S7 in FIG. 1 are not necessary. That is because, the category information has already been transmitted to the base station eNB at step S71 in FIG. 7 according to this modified example.

According to this modified example, at and after step S71, the base station eNB knows the category information of the user device UE. Thus the base station eNB can recognize the number of the rank indicator (RI) bits correctly. For the modified example 3, the above-described operation principle and the process of resetting the number of the RI bits according to the modified example 1 are not necessary. The modified example 3 is preferable from the point that the user device UE having a lower capability is not required to generate the rank indicator (RI) by using an unnecessarily large bit number. In this regard, the modified example 3 is more advantageous than the modified example 2.

### <5. User device>

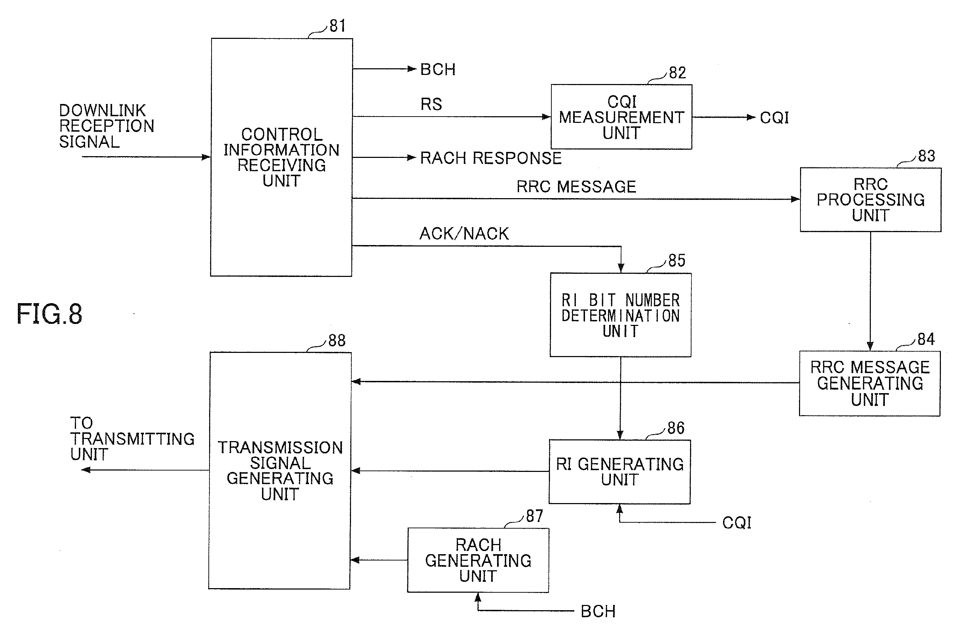

FIG. 8 shows a schematic block diagram of the user device UE. As shown in the figure, among various processing units included in the user device UE, a control information receiving unit 81, a CQI measurement unit 82, a RRC processing unit 83, a RRC message generating unit 84, a RI bit number determination unit 85, a RI generating unit 86, a RACH generating unit 87, and a transmission signal generating unit 88 are shown.

The control information receiving unit 81 extracts various types of information from received signals that have been received on the downlink. In the example shown in the figure, among various information to be extracted, broadcast information (BCH), a reference signal (RS), a RACH response message, a RRC message, and an acknowledgement signal PHICH (ACK/NACK) are shown.

The CQI measurement unit 82 measures a receiving quality or a reception level of the downlink, based on the received reference signal RS, and generates information indicating whether the radio condition of the downlink is good or not (e.g., the CQI). The reception level may be expressed, for example, by the received power, the received signal strength indication (RSSI), the received signal code power (RSCP), the path loss, the S/N, the SIR, or the E_{c}/N₀.

The RRC processing unit 83 executes a process depending on a received RRC message. For example, when the RACH response message is received, it prompts to generate the RRC connection request message.

The RRC message generating unit 84 generates the RRC message to be transmitted to the base station eNB. In the above-described modified example 3, the RRC message generating unit 84 generates the RRC connection request message including the category information.

The RI bit number determination unit 85 determines the number of the rank indicator (RI) bits. For the cases of the above operation principle and the modified example 1, first, the number of the RI bits is determined to be the bit number (e.g., 1 bit) that has already been known to the user device UE and the base station eNB. Subsequently, when the acknowledgement signal (ACK/NACK) to the PUSCH including the category information is the positive response (ACK), the RI bit number determination unit 85 redetermines the number of the RI bits to be the optimum value, based on the category information and the number of the antennas of the base station eNB. The optimum value is the bit number that is required for expressing the maximum rank number that can be utilized by both the user device UE and the base station eNB. For the case of the modified example 2, the bit number identified by the number of the antennas of the base station eNB (namely, the bit number required for expressing the maximum rank number of the base station eNB) is determined as the number of the RI bits. For the case of the modified example 3, the optimum number of the RI bits based on the category information of the user device UE and the number of the antennas of the base station eNB is utilized from the beginning. The optimum number of the RI bits is the bit number that is required for expressing the maximum rank number that can be utilized by both the user device UE and the base station eNB.

The RI generating unit 86 determines the rank indicator (RI), based on the measured receiving quality, the CQI, or the like. The number of the rank indicator (RI) bits is the value determined in the RI bit number determination unit 85.

The RACH generating unit 87 generates the RACH preamble by utilizing the broadcast information (BCH).

The transmission signal generating unit 88 generates the transmission signal by applying the channel coding, the data modulation, the interleave, and the like to the information to be transmitted and by multiplexing various channels. The generated transmission signal is transmitted through a transmission unit, which is not shown in the figure.

### <6. Base station>

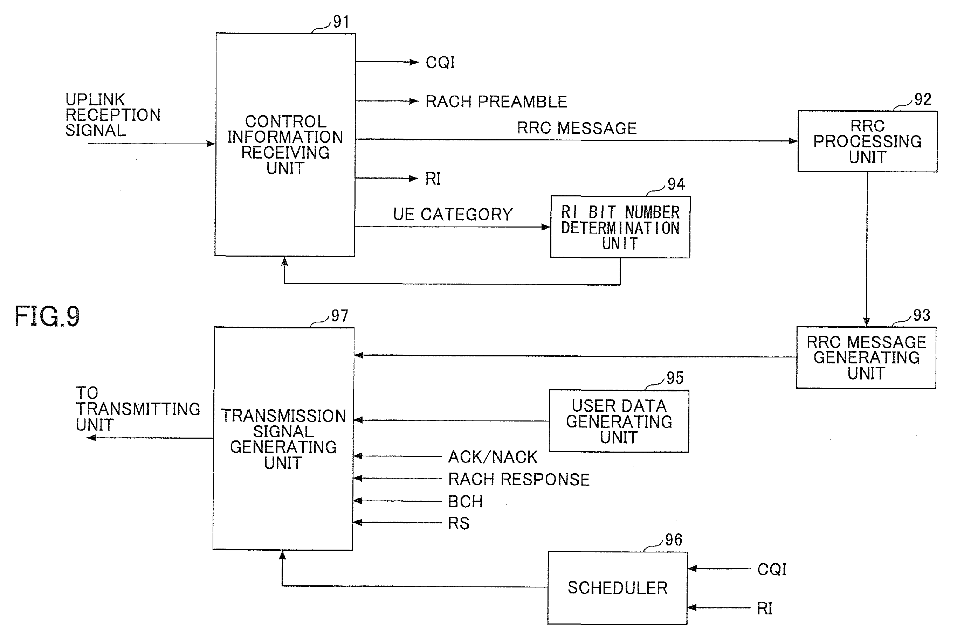

FIG. 9 shows a schematic block diagram of the base station. In the case of the example shown in the figure, among various processing unit included in the base station eNB, a control information receiving unit 91, a RRC processing unit 92, a RRC message generating unit 93, a RI bit number determination unit 94, a user data generating unit 95, a scheduler 96, and a transmission signal generating unit 97 are shown.

The control signal receiving unit 91 extracts various types of signals from signals received on the uplink. In the example shown in the figure, among various types of information to be extracted, the CQI, the RACH preamble, the RRC message, the rank indicator RI, and the UE category are shown.

The RRC processing unit 92 executes a process depending on the received RRC message. For example, when the RRC connection request message is received, it prompts to generate the RRC connection setup message.

The RRC message generating unit 93 generates the RRC message to be transmitted to the user device UE.

The RI bit number determination unit 94 determines the number of the rank indicator (RI) bits. In the cases of the above-described operation principle and the modified example 1, first, the number of the RI bits is determined to be a bit number that has already been known to the user device UE and the base station eNB (e.g., 1 bit). After that, when the category information is transmitted from the user device UE, the RI bit number determination unit 94 redetermines the number of the RI bits to be the optimum value, based on the category information and the number of the antennas of the base station eNB. The optimum value is the bit number that is required for expressing the maximum rank that can be utilized by both the user device UE and the base station eNB. In the case of the modified example 2, the bit number that is identified depending on the number of the antennas of the base station eNB (namely, the bit number that is required for expressing the maximum rank number of the base station eNB) is determined to be the number of the RI bits. In the case of the modified example 3, the optimum number of the RI bits that is based on the category information of the user device and the number of the antennas of the base station eNB is utilized from the beginning. The optimum number of the RI bits is the bit number that is required for expressing the maximum rank number that can be utilized by both the user device UE and the base station eNB.

The user data generating unit 95 generates the user data or the user traffic data.

The scheduler 96 determines the allocation of the radio resources to the user device UE, based on the CQI and the RI.

The transmission signal generating unit 97 generates the transmission signal by applying the channel coding, the data modulation, the interleave, and the like to the information to be transmitted in accordance with an instruction from the scheduler and by multiplexing various channels. The generated transmission signal is transmitted through a transmission unit, which is not shown in the figure.

In the above, the present invention has been explained while referring to the specific embodiments. However, these are merely exemplary. Those skilled in the art will conceive of various modified examples, corrected examples, alternative examples, substituted examples, and the like. The present invention may be applied to any suitable mobile communication system that performs the rank adaptation. For example, the present invention may be applied to W-CDMA systems of the HSDPA/HSUPA scheme, systems of the LTE scheme, IMT-Advanced systems, WiMAX, Wi-Fi scheme systems and the like. While specific numerical value examples are used to facilitate understanding of the present invention, such numerical values are merely examples. Thus, any appropriate value may be used unless specified otherwise. Classification into each item in the description is not essential in the present invention, and features described in two or more items may be combined and used as necessary. Subject matter described in an item may be applied to subject matter described in another item (provided that they do not contradict). For convenience of explanation, the devices according to the embodiment of the present invention have been explained by using functional block diagrams. However, these devices may be implemented in hardware, software, or a combination thereof. The software may be prepared in any storage medium such as a random access memory (RAM), a flash memory, a read-only memory (ROM), an EPROM, an EEPROM, a register, a hard disk (HDD), a removable disk, a CD-ROM, a database, a server, and the like. The present invention is not limited to the above embodiments, so that various modified examples, corrected examples, alternative examples, substituted examples, and the like are included in the present invention without departing from the spirit of the present invention.

The present international application claims priority based on Japanese patent application No. 2010-3034, filed on January 8, 2010, and the entire contents of which are hereby incorporated by reference.

## Claims

1. A user device for a mobile communication system comprising:
a RI generating unit that generates a rank indicator based on a channel condition of a downlink; and
a transmitting unit that transmits an uplink signal including the rank indicator to a base station,
wherein, when the rank indicator is reported to the base station prior to reporting category information of the user device to the base station, the RI generating unit generates the rank indicator of a number of bits, the number of bits having already been known to the user device and the base station.

2. The user device according to claim 1, wherein the number of bits having already been known is required for expressing the rank indicator that can be utilized by all user devices in the mobile communication system.

3. The user device according to claim 1 or 2, further comprising:
a receiving unit that receives an acknowledgement signal indicating a positive response or a negative response with respect to an uplink signal including the category information,
wherein, when the positive response is obtained, the RI generating unit generates the rank indicator of the number of bits, the number of bits being determined based on the category information and a number of antennas of the base station.

4. The user device according to claim 1, wherein the number of bits that has already been known is determined depending on a number of antennas of the base station.

5. The user device according to claim 4, wherein, even after a positive response is obtained with respect to an uplink signal including the category information, the RI generating unit generates the rank indicator represented by the number of bits determined depending on the number of the antennas of the base station.

6. The user device according to claim 4, further comprising:
a receiving unit that receives an acknowledgement signal indicating a positive response or a negative response with respect to an uplink signal including the category information,
wherein, when the positive response is obtained, the RI generating unit generates the rank indicator of the number of bits, the number of bits being determined based on the category information and the number of the antennas of the base station.

7. The user device according to any one of claims 1 through 6,
wherein the category information can uniquely identify the number of bits of the rank indicator, wherein the rank indicator can be utilized by the user device.

8. A base station for a mobile communication system comprising:
a receiving unit that receives an uplink signal including a rank indicator from a user device; and
a transmitting unit that transmits a downlink signal to the user device, the downlink signal having been scheduled based on the rank indicator,
wherein, when the category information of the user device has been unknown to the base station, the rank indicator received by the base station is represented by a number of bits, the number of the bits having already been known to the user device and the base station.

9. The base station according to claim 8,
wherein the number of bits having already been known is required for expressing the rank indicator that can be utilized by all user devices in the mobile communication system.

10. The base station according to claim 8 or 9,
wherein the transmitting unit transmits an acknowledgement signal indicating a positive response or a negative response with respect to an uplink signal including the category information, and
wherein, the rank indicator being received after the uplink signal including the category information has been decoded or after the positive response has been transmitted is represented by the number of bits that has been determined based on the category information and a number of antennas of the base station.

11. The base station according to claim 8,
wherein the number of bits having already been known is determined based on a number of antennas of the base station.

12. The base station according to claim 11,
wherein the rank indicator received after the uplink signal including the category information has been decoded or after the positive response with respect to the uplink signal including the category information has been transmitted is represented by the number of bits determined based on the number of the antennas of the base station.

13. The base station according to claim 11,
wherein the transmitting unit transmits an acknowledgement signal indicating a positive response or a negative response with respect to the uplink signal including the category information, and
wherein the rank indicator received after the uplink signal including the category information has been decoded or after the positive response has been transmitted is represented by the number of bits that is determined based on the category information and the number of the antennas of the base station.

14. The base station according to any one of claims 8 through 13,
wherein the category information is able to uniquely identify the number of bits of the rank indicator, wherein the rank indicator can be utilized by the user device.

15. A method for a mobile communication system comprising:
a step, by a user device, of generating a rank indicator based on a channel condition of a downlink and transmitting an uplink signal including the rank indicator to a base station;
a step, by the base station, of scheduling a downlink signal based on the received rank indicator and transmitting the downlink signal to the user device,
wherein the rank indicator to be reported to the base station by the user device, prior to transmitting the category information of the user device to the base station, is represented by a number of bits that has already been known to the user device and the base station.

16. A user device for a mobile communication system comprising:
a RRC message generating unit that generates a RRC connection request message;
a RI bit number determination unit that determines a number of bits of a rank indicator;
a RI generating unit that generates the rank indicator of the number of the bits, the number of the bits being determined by the bit number determination unit based on a channel condition of a downlink;
a transmitting unit that transmits the rank indicator to the base station at a reporting frequency that has been notified by the base station after transmitting the RRC connection request message,
wherein the RRC connection request message generated by the RRC message generating unit includes category information that can uniquely identify the number of bits of the rank indicator that can be utilized by the user device, and
wherein the RI bit number determination unit determines the number of bits of the rank indicator, based on the category information and an antenna configuration of the base station.

17. A base station for a mobile communication system comprising:
a RRC processing unit that receives a RRC connection request message from a user device and that extracts category information that can uniquely identify a number of bits of a rank indicator from the RRC connection request message;
a RRC message generating unit that generates a RRC connection setup message, the RRC connection setup message indicating at least a reporting frequency of the rank indicator;
a RI bit number determination unit that determines the number of bits of the rank indicator based on the category information and an antenna configuration of the base station; and
a transmitting unit that transmits a downlink message to the user device, wherein the downlink message has been scheduled based on the rank indicator reported from the user device at the reporting frequency, after the user device has been reported the RRC connection setup message.

18. A method for a mobile communication system comprising:
a step of transmitting, by a user device, an RRC connection request message to a base station, and extracting, by the base station, category information from the RRC connection request message, the category information being able to uniquely identify a number of rank indicator bits that can be utilized by the user device;
a step, by the base station, of notifying the user device of a RRC connection setup message, the RRC connection setup message indicating at least a reporting frequency of a rank indicator;
a step, by the user device, of determining the number of the rank indicator bits based on the category information and an antenna configuration of the base station, and generating the rank indicator of the determined number of bits based on a channel condition of a downlink; and
a step, by the base station, of determining the number of the rank indicator bits based on the category information and the antenna configuration of the base station, and receiving the rank indicator of the number of bits from the user device at the reporting frequency.
